(19) Europäisches Patentamt
European Patent Office
Office européen des brevets

(11) Veröffentlichungsnummer: **0 105 031**
**B1**

(12) **EUROPÄISCHE PATENTSCHRIFT**

(45) Veröffentlichungstag der Patentschrift: **04.01.89**

(51) Int. Cl.⁴: **C 09 B 44/20,** D 06 P 1/08

(21) Anmeldenummer: **83810383.6**

(22) Anmeldetag: **25.08.83**

(54) **Kationische Azoverbindungen.**

(30) Priorität: **30.08.82 CH 5141/82**

(43) Veröffentlichungstag der Anmeldung: **04.04.84 Patentblatt 84/14**

(45) Bekanntmachung des Hinweises auf die Patenterteilung: **04.01.89 Patentblatt 89/1**

(84) Benannte Vertragsstaaten: **CH DE FR GB LI**

(56) Entgegenhaltungen:
**FR-A-2 095 219**
**FR-A-2 103 304**
**FR-A-2 262 685**
**FR-A-2 352 041**
**US-A-3 102 878**

**Die Akte enthält technische Angaben, die nach dem Eingang der Anmeldung eingereicht wurden und die nicht in dieser Patentschrift enthalten sind.**

(73) Patentinhaber: **CIBA- GEIGY AG, Klybeckstrasse 141, CH- 4002 Basel (CH)**

(72) Erfinder: **Zink, Rudolf, Alemannenstrasse 2, CH- 4106 Therwil (CH)**

**EP 0 105 031 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft neue kationische Azoverbindungen, Verfahren zu deren Herstellung und deren Verwendung als Farbstoffe zum Färben und/oder Bedrucken von Polyacrylnitrilmaterialien oder sauer modifizierten Polyamid- und Polyestermaterialien.

Die neuen kationischen Azoverbindungen entsprechen der Formel

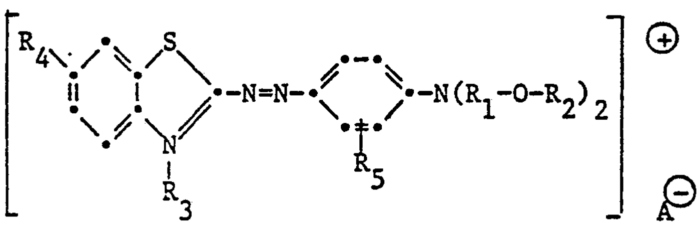

(I),

worin bedeuten:

$R_1$ einen $C_1$-$C_4$-Alkylenrest,
$R_2$ einen $C_1$-$C_4$-Alkylrest;
$R_3$ einen unsubstituierten $C_1$-$C_4$-Alkylrest,
$R_4$ einen $C_1$-$C_4$-Alkoxyrest
$R_5$ Wasserstoff, und
$A^{\ominus}$ ein Anion.

Bedeuten $R_1$ einen $C_1$-$C_4$-Alkylenrest, $R_2$ oder $R_3$ eine $C_1$-$C_4$-Alkylgruppe, so handelt es sich um eine unverzweigte oder verzweigte Alkyl- bzw. Alkylengruppe wie z. B. um die Methyl-, Äthyl-, n- und iso-Propyl-, n-, sec.- und tert.-Butylgruppe.

Bei $R_4$ als $C_1$-$C_4$-Alkoxygruppe, handelt es sich um eine unverzweigte oder verzweigte Alkoxygruppe wie z. B. um die Methoxy-, Äthoxy-, n- und iso-Propoxy- und n-, sec.- und tert.-Butoxygruppe.

In den infölge ihrer gutem Lichtechtheit bevorzugten kationischen Azoverbindungen der Formel I bedeuten $R_1$ den $C_2H_4$-Rest, $R_2$ und $R_3$ je den $CH_3$-Rest, $R_4$ einen $C_1$-$C_4$-Alkoxyrest, insbesondere den Methoxyrest, und $R_5$ Wasserstoff.

$A^{\ominus}$ in der Bedeutung eines Anions stellt sowohl organische wie anorganische Ionen dar, z. B. Halogen, wie Chlorid-, Bromid- oder Jodid-, Bortetrafluorid-, Rhodanid-, Sulfat-, Methylsulfat-, Äthylsulfat, Aminosulfonat-, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfonat-, Oxalat-, Maleinat-, Formiat-, Acetat-, Propionat-, Lactat-, Succinat-, Chloracetat-, Tartrat-, Methansulfonat- oder Benzoationen, oder komplexe Amionen, wie das von Chlorzinkdoppelsalzen.

Die neuen kationischen Azoverbindungen sind technisch gut zugänglich und können beispielsweise erhalten werden, wenn man ein Amin der Formel II

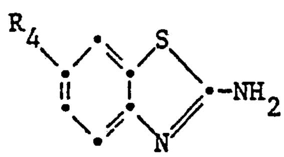

(II),

worin $R_4$ die genannte Bedeutung hat, diazotiert, mit einer Kupplungskomponente der Formel III

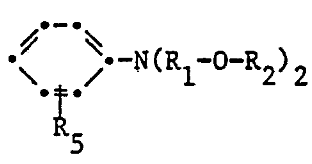

(III),

worin $R_1$, $R_2$ und $R_5$ die genannte Bedeutung haben, kuppelt und mit Verbindungen der Formel

$R_3$ - A,

worin $R_3$ die genannte Bedeutung hat und A einen bei der Quaternierung in das Anion $A^{\ominus}$ überführbaren Rest bedeutet, quaterniert.

Die Amine der Formel II sind bekannt (z. B. DE-OS 2 409 543) und können nach bekannten Methoden

hergestellt werden. Genannt sind z. B.:

2-Amino-6-methoxy-benzthiazol,
2-Amino-6-äthoxy-benzthiazol oder
2-Amino-6-n-propoxy-benzthiazol.

Bekannt sind ebenfalls die Kupplungskomponenten der Formel III (Boon, Chem. Soc. 1947, p. 311), welche nach bekannter Art und Weise hergestellt werden können. Genannt sind beispielsweise:

N,N-Di-(methoxy-methyl)-anilin,
N,N-Di-(äthoxy-methyl)-anilin,
N,N-Di-(äthoxy-äthyl)-anilin,
N,N-Di-(methoxy-äthyl)-anilin,
N,N-Di-(iso-propoxy-äthyl)-anilin,
N,N-Di-(n-butoxy-iso-propyl)-anilin,
2-Methyl-N,N-di-(äthoxy-äthyl)-anilin,
2-Äthoxy-N,N-di-(methoxy-äthyl)-anilin und
2-Methoxy-N,N-di-(methoxy-äthyl)-anilin.

Die Kupplungsreaktion wird nach bekannter Art und Weise durchgeführt, z. B. indem man das Amin der Formel II diazotiert und auf die Kupplungskomponente III, vorteilhaft bei Temperaturen unter 10° C, z. B. in Eisessig, kuppelt.

Anschließend an die Kupplungsreaktion erfolgt die Quaternisierung nach bekannter Art und Weise; diese kann z. B. in Eisessig oder in einem inerten Lösungsmittel wie Chlorbenzol, gegebenenfalls in Gegenwart einer anorganischen Base, oder gegebenenfalls in wässriger Suspension, oder ohne Lösungsmittel in einem Überschuss des Quaternisierungsmittels bei einer Temperatur von ca. 20° bis 120° C erfolgen.

Geeignete Quaternisierungsmittel sind z. B. Alkylhalogenide, wie Methyl- oder Äthylchlorid, Methyl-, Äthyl- oder Butylbromid oder Methyl- oder Äthyljodid, vor allem jedoch Alkylsulfate wie Dimethyl-, Diäthyl- und Dibutylsulfat, und Alkylester von aromatischen Sulfonsäuren, wie Methyl-p-toluolsulfonat, Methylbenzolsulfonat sowie die n- und iso-Propyl- und n-, sec.- und tert.-Butylester von Benzolsulfonsäure; ferner kommen in Frage Epoxyde wie Äthylenoxyd, Alkoxyalkylester der Benzolsulfonsäure, Acrylamid gegebenenfalls substituiert durch Alkyl, dann Acrylnitril und Dihalogenalkylene.

Nach der Quaternisierung können die neuen kationischen Azoverbindungen vom Reaktionsmedium getrennt und getrocknet werden oder direkt aus der Reaktionslösung gefärbt werden. Falls gewünscht oder erforderlich, ist es möglich, in den Verbindungen der Formel I das Anion A gegen ein anderes Anion auszutauschen.

Verwendung finden die neuen kationischen Azoverbindungen der Formel I als Farbstoffe zum Färben und unter Zusatz von Binde- und Lösungsmitteln zum Bedrucken von mit kationischen Farbstoffen anfärbbaren Materialien, insbesondere Textilmaterialien, die z. B. aus Homo- oder Mischpolymerisaten des Acrylnitrils bestehen, oder synthetische Polyamide oder Polyester, welche durch saure Gruppen modifiziert sind. Desweiteren dienen die neuen kationischen Farbstoffe auch zum Färben von Nasskabel, Kunststoffmassen, Leder und Papier. Man färbt vorzugsweise aus wässerigem neutralem oder saurem Medium nach dem Ausziehverfahren, gegebenenfalls unter Druck oder nach dem Kontinueverfahren. Das Textilmaterial kann dabei in verschiedenartigster Form vorliegen, beispielsweise als Faser, Faden, Gewebe, Gewirke, Stückware und Fertigware, wie Hemden, Pullover.

Durch die Applikation der Farbstoffe lassen sich sehr brillante, farbstarke, neutrale blaue Färbungen bzw. Drucke herstellen, die sich durch sehr gute Allgemeinechtheiten, wie Wasch- und Schweissechtheit und vor allem einer guten Lichtechtheit auszeichnen. Die neuen kationischen Azofarbstoffe der Formel I sind zudem sehr gut kombinierbar mit anderen handelsüblichen Farbstoffen.

In den folgenden Beispielen bedeuten die Teile (T) Gewichtsteile, die Prozente Gewichtsprozente und die Temperaturen sind in Celsiusgraden angegeben.

Die US-A-3 102 878 beschreibt zwar eine sehr breite allgemeine Formel für Farbstoffe welche auch einige der erfindungsgemäßen Farbstoffe umfasst. Es ist jedoch kein Farbstoff konkret offenbart, welcher eine Dialkoxyalkylaminogruppe an der Kupplungskomponente trägt. Die FR-A-2 262 685 beschreibt Farbstoffe mit einer Monoalkyl-monoalkoxyalkyl-aminogruppe an der Kupplungskomponente.

**Beispiel 1**

13 g 2-Amino-6-methoxybenzthiazol werden auf übliche Weise in Nitrosylschwefelsäure diazotiert und auf 15 g N,N-Di-Methoxyäthylanilin in Wasser gekuppelt. Durch Zutropfen von verdünnter Natronlauge wird der Farbstoff bei einem pH-Wert von ca. 2 ausgefällt und abfiltriert. Man erhält nach der Trocknung 28 g eines violetten Farbstoffes.

20 g davon werden in 60 ml Wasser bei 20 - 25° mit 15,7 g Dimethylsulfat angeschlämmt und während 6

Stunden durch Zutropfen einer verdünnten Sodalösung bei pH 3-4 gehalten (Temperatur ca. 30°). Das ausgefallene Produkt wird abfiltriert und in 800 ml 1N Essigsäure bei 50° gelöst und klärfiltriert. Das geklärte Filtrat wird mit Kochsalz versetzt, bis der Farbstoff der Formel

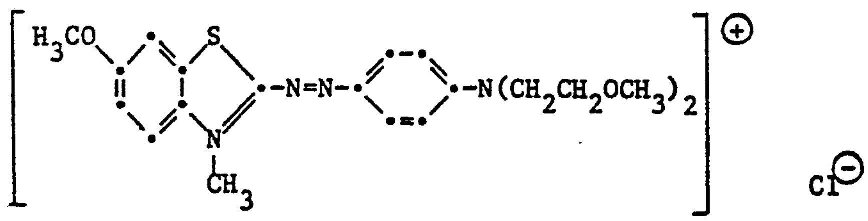

ausfällt. Dieser wird abfiltriert und getrocknet. Man erhält 12 g trockenes Produkt, welches auf Polyacrylnitril reine, blaue Färbungen mit sehr guten Echtheiten erzeugt.

**Beispiel 2**

5 g des gemäß Beispiel 1 hergestellten Farbstoffes werden mit 2 g 40 %-iger Essigsäure angeteigt und durch Zugabe von 4000 g heissem Wasser in Lösung gebracht. Man setzt noch 1 g Natriumacetat und 2 g eines mit Dimethylsulfat quaternisierten Anlagerungsproduktes von 15 bis 20 Äquivalenten Äthylenoxyd an N-Octadecyldiäthylentriamin zu und geht mit 100 g Polyacrylnitrilgewebe bei 60° ein. Innerhalb 30 Minuten erhitzt man das Bad auf 100° und färbt dann kochend während 90 Minuten. Hierauf lässt man die Flotte im Verlauf von 30 Minuten bis auf 60° abkühlen. Das so gefärbte Material wird dann herausgenommen und anschließend mit lauwarmem und kaltem Wasser gespült. Man erhält eine reine blaue Polyacrylnitrilfärbung, die eine gute Lichtechtheit besitzt.

**Beispiel 3**

Ein Polyacrylnitril-Mischpolymerisat, bestehend aus 93 % Acrylnitril und 7 % Vinylacetat wird in Dimethylacetamid zu 15 % gelöst. Die Spinnflüssigkeit wird in ein Spinnbad extrudiert, welches aus 40 % Dimethylacetamid und 60 % Wasser besteht. Anschließend wird das entstandene Spinnkabel nach bekannten Methoden verstreckt und durch Spülen mit heissem und kaltem Wasser vom Dimethylacetamid befreit.

Dieses nasse Spinnkabel wird durch Tauchen in einem Bad von 42° folgender Zusammensetzung gefärbt:

9 g/l Farbstoff gemäß Beispiel 1

pH 4,5 mit Essigsäure

Die Kontaktzeit Faserkabel-Färbeflotte beträgt 3-5 Sekunden. Anschliessend wird die überschüssige Farbflotte abgequetscht und das Spinnkabel dem Trockner zugeführt. Es resultiert ein blau gefärbtes Faserkabel mit guten Echtheiten.

**Beispiel 4**

Man bereitet eine Druckpaste, bestehend aus:

25 T des gemäß Beispiel 1 erhaltenen Farbstoffes,
30 T Thiodiglykol,
20 T Essigsäure (80 %-ig),
350 T kochendem Wasser,
500 T Johannisbrotkernmehlverdickung,
30 T Weinsäure
15 T Di-(β-cyanäthyl)-formamid und
30 T eines Naphthalinsulfonsäureformaldehyd-Kondensationsproduktes.

Ein mit dieser Druckpaste bedrucktes Polyacrylnitril-Gewebe wird danach auf einem HT-Hängeschleifendämpfer 20 bis 30 Minuten bei 101° bis 103° fixiert und wie üblich fertiggestellt. Man erhält einen blauen Druck.

**Patentansprüche**

1. Kationische Azoverbindungen der Formel I

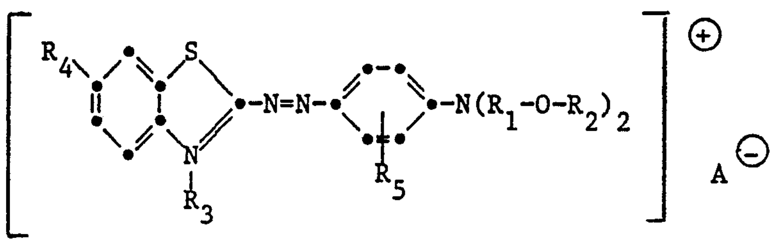

(I) ,

worin bedeuten:

$R_1$ einen $C_1$-$C_4$-Alkylenrest,
$R_2$ einen $C_1$-$C_4$-Alkylrest,
$R_3$ einen unsubstituierten $C_1$-$C_4$-Alkylrest,
$R_4$ einen $C_1$-C-Alkoxyrest
$R_5$ Wasserstoff und
$A^{\ominus}$ ein Anion.

2. Kationische Azoverbindungen gemäß Anspruch 1, dadurch gekennzeichnet, daß $R_1$ den $C_2H_4$-Rest bedeutet.

3. Kationische Azoverbindungen gemäß Anspruch 1, dadurch gekennzeichnet, daß $R_2$ den $CH_3$-Rest bedeutet.

4. Kationische Azoverbindungen gemäß Anspruch 1, dadurch gekennzeichnet, daß $R_3$ den $CH_3$-Rest bedeutet.

5. Kationische Azoverbindungen gemäß Anspruch 1, dadurch gekennzeichnet, daß $R_4$ den Methoxyrest bedeutet.

6. Kationische Azoverbindungen gemäß Anspruch 1, dadurch gekennzeichnet, daß $R_1$ den $C_2H_4$-Rest, $R_2$ und $R_3$ je den $CH_3$-Rest, $R_4$ einen $C_1$-$C_4$-Alkoxyrest und $R_5$ Wasserstoff bedeuten.

7. Verfahren zur Herstellung von kationischen Azoverbindungen gemäß Anspruch 1, dadurch gekennzeichnet, daß man Amine der Formel II

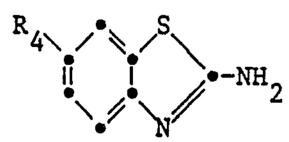

(II) ,

worin $R_4$ die genannte Bedeutung hat, diazotiert, mit einer Kupplungskomponente der Formel III

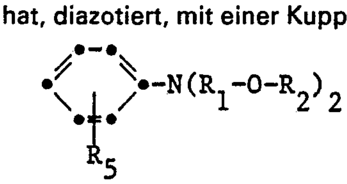

(III) ,

worin $R_1$, $R_2$ und $R_5$ die genannte Bedeutung haben, kuppelt und mit Verbindungen der Formel

$R_3$ - A,

worin $R_3$ die genannte Bedeutung hat und A einen bei der Quaternierung in das Anion $A^{\ominus}$ überführbaren Rest bedeutet, quaterniert.

8. Verwendung der kationischen Azoverbindungen gemäß Anspruch 1 als Farbstoffe zum Färben und/oder Bedrucken von Polyacrylnitrilmaterialien oder sauer modifizierten Polyamid- oder Polyestermaterialien.

9. Die mit den kationischen Azoverbindungen gemäß Anspruch 1 behandelten Materialien.

**Claims**

1. A cationic azo compound of the formula I

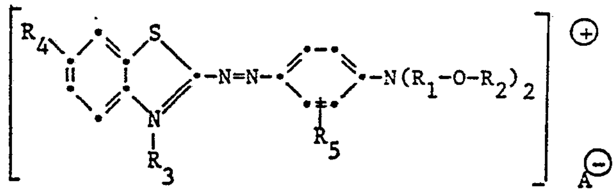

in which

$R_1$ is a $C_1$-$C_4$alkylene group,
$R_2$ is a $C_1$-$C_4$alkyl group,
$R_3$ is an unsubstituted $C_1$-$C_4$alkyl group,
$R_4$ is a $C_1$-$C_4$alkoxy group,
$R_5$ is hydrogen and
$A^{\ominus}$ is an anion.

2. A cationic azo compound according to claim 1, wherein $R_1$ is the $C_2H_4$ group.
3. A cationic azo compound according to claim 1, wherein $R_2$ is the $CH_3$ group.
4. A cationic azo compound according to claim 1, wherein $R_3$ is the $CH_3$ group.
5. A cationic azo compound according to claim 1, wherein $R_4$ is the methoxy group.
6. A cationic azo compound according to claim 1, wherein $R_1$ is the $C_2H_4$ group $R_2$ and $R_3$ are each the $CH_3$ group, $R_4$ is a $C_1$-$C_4$alkoxy group, and $R_5$ is hydrogen.
7. A process for producing a cationic azo compound according to claim 1, which process comprises diazotising an amine of the formula II

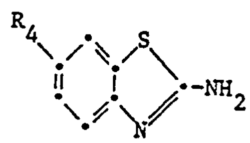
(II)

in which $R_4$ is as defined in the foregoing, and coupling with a coupling component of the formula III

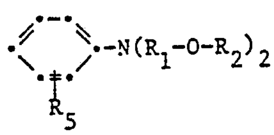
(III)

in which $R_1$ $R_2$ and $R_5$ are as defined in the foregoing, and quaternising the diazotised product with a compound of the formula

$R_3$ - A,

in which $R_3$ is as defined in the foregoing, and A is a radical convertible by the quaternising reaction into the anion $A^{\ominus}$.
8. Use of a cationic azo compound according to claim 1 as a dye for dyeing and/or printing polyacrylonitrile materials, or polyamide or polyester materials modified with acid groups.
9. The materials treated with a cationic azo compound according to claim 1.

**Revendications**

1. Composés azoïques cationiques de formule I

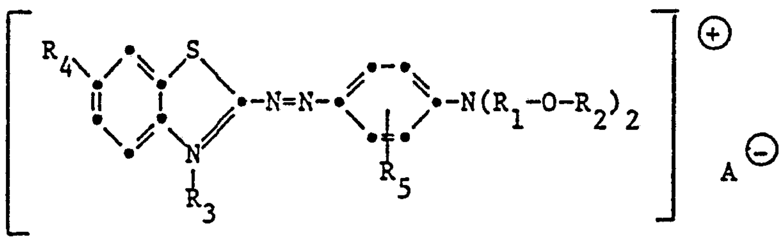

(I) ,

dans laquelle

$R_1$ est un radical alkylène en $C_1$-$C_4$,
$R_2$ est un radical alkyle en $C_1$-$C_4$;
$R_3$ est un radical alkyle en $C_1$-$C_4$ non-substitué;
$R_4$ est un radical alcoxy en $C_1$-$C_4$;
$R_5$ est un hydrogène et
$A^{\ominus}$ est un anion.

2. Composés azoïques cationiques selon la revendication 1, caractérisés en ce que $R_1$ est le radical $C_2H_4$.

3. Composés azoïques cationiques selon la revendication 1, caractérisés en ce que $R_2$ est le radical $CH_3$.

4. Composés azoïques cationiques selon la revendication 1, caractérisés en ce que $R_3$ est le radical $CH_3$.

5. Composés azoïques cationiques selon la revendication 1, caractérisés en ce que $R_4$ est le radical méthoxy.

6. Composés azoïques cationiques selon la revendication 1, caractérisés en ce que $R_1$ est le radical $C_2H_4$, $R_2$ et $R_3$ représentent chacun le radical $CH_3$, $R_4$ est un radical alcoxy en $C_1$-$C_4$, et $R_5$ est un hydrogène.

7. Procédé pour la préparation de composés azoïques cationiques selon la revendication 1, caractérisé en ce qu'on diazote des amines de formule II

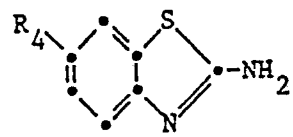

(II) ,

dans laquelle $R_4$ a la signification donnée ci-dessus, qu'on les copule avec un composant de copulation de formule III

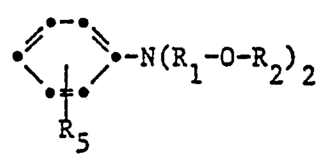

(III) ,

dans laquelle $R_1$, $R_2$ et $R_5$ ont les significations données ci-dessus, et qu'on les quaternise avec des composés de formule

$R_3$ - A,

dans laquelle $R_3$ a la signification donnée ci-dessus et A est un radical pouvant être converti en l'anion $A^{\ominus}$ lors de la quaternisation.

8. Utilisation des composés azoïques cationiques selon la revendication 1, comme colorants pour la teinture et/ou l'impression de matières en polyacrylonitrile ou de matières en polyamide ou polyester modifié par un acide.

9. Matières traitées par les composés azoïques cationiques selon la revendication 1.